# EUROPEAN PATENT SPECIFICATION

(11) **EP 1 408 731 B1**
(45) Date of publication and mention of the grant of the patent: **25.10.2006**
(21) Application number: 02712118.5
(22) Date of filing: 19.02.2002
(51) Int. Cl.: A01D 46/26

(54) **HARVESTER OF OLIVES**
ERNTEMASCHINE FÜR OLIVEN
DISPOSITIF SERVANT A CUEILLIR LES OLIVES

(30) Priority: 20.02.2001 GR 2001100095
(43) Date of publication of application: 21.04.2004
(73) Proprietor: Marakis, Nikolaos, 71201 Heraklion (GR)
(72) Inventor: Marakis, Nikolaos, 71201 Heraklion (GR)
(86) International application number: PCT/GR2002/000009
(87) International publication number: WO 2002/065826

(56) References cited:
- FR-A- 1 379 506
- FR-A- 1 505 995
- FR-A- 2 345 063
- GR-B- 1 002 725
- US-A- 5 946 896

## Description

This invention is about the mechanical, through hydraulics, striking of olive trees, in order to drop the olives off the tree (see e.g. FR-A-1 379 506).

This particular machinery can be manufactured in two versions:

The first version (drawing A), is an automotive machinery that can be driven, and whose operator will be performing all the machinery's functions, from the driver's seat.

The second version (drawing B), is a machinery attached to and pulled by a tractor, or to a similar type of vehicle. The necessary motion for the operation of its hydraulics will be taken by the tractor over a compler traction transferred over a pivot). In this case the operator seats on the machinery during the operation.

Both versions A and B are both comprised by the following parts:
A: from a metal block which is build on wheels, for its easy transportation. Except the oil pump, on this block we also have the following parts:
   A.a: a telescopic metal rod which extends up to 6 meters.
   A.b: a foil of PVC aprox. 1cm thick, for the collection of the olives
   A.c: a continuous rolling belt, which has two parts, sends the olives into the sack a1 or b1.
   A.d: An absorber who will separate the leaves from the olives.
      A.a.1: Telescopic rod: the operator extends the rod to the necessary length, moves it vertically up and down, horizontally left and right, and semi circular left and right. The telescopic rod is fixed on the metal block, whilst the striker is fixed on the end side of the rod.
      A.a.2 : Frame striker: this is a metal framework fixed, as we already mentioned above, on the end of the telescopic rod. On its other side, has three rows of strikers. It moves up and down and semi circle left and right.
      A.a.3: Strikers : these are three rods vertically installed on the end side of the rod, with four plastic strikers (of a crossed pattern) on each rod. They rotate in circularly by a hydraulic motor, which is fixed on the rod. It transfers the drive/motion, with a chain simultaneously to all three rods.
      A.a.4: Plastic strikers : a plastic striker 50mm thick and 25cm long. They are fixed on the striker by four in a cross pattern. As they turn around, they heat the branches of the olive tree and as a result the olives fall into the foil PVC.
      A.b.1: Collection area: it consists of an elastic top made of PVC, 1cm thick. It has three parallelogramical parts. The left and right one, open hydraulically outwards and they to stop underneath the third and firm piece. Each one to its side. The PVC foil is fixed on the second hub of an hydraulic telescope, therefore to be able to come close to the tree.
      The other side of the telescope is fixed on the opposite side of the compler, in order to move 180o, thus working on trees to the left and to the right side.
      The PVC foil has a hole, in which the olives fall, either due to its angle, or by a hydraulic angle done by the operator.
      Where the olives fall (in the hole), there is a rotating belt which, after the absorber has separated the leaves, brings the olives into sack.

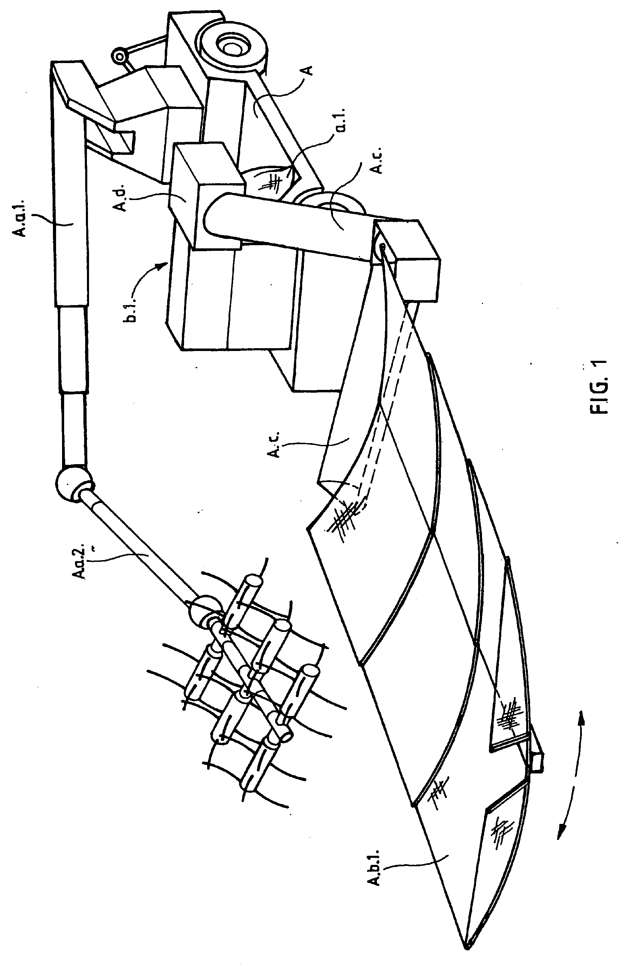

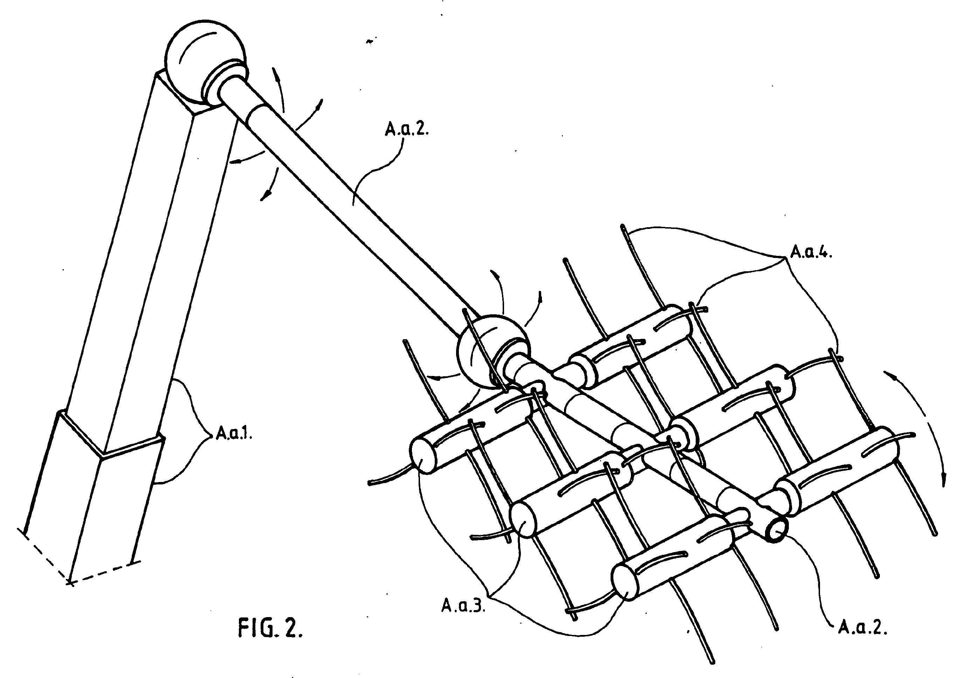

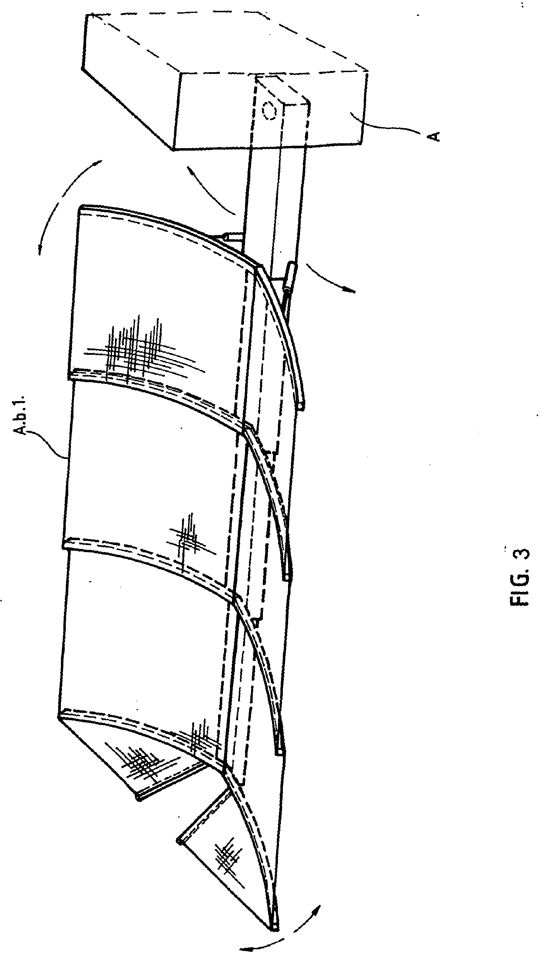

## Claims

1. Olive harvesting machine for the collection of olives through striking an olive tree at selected locations thereof to effect downfall of olives and subsequently separating olives from leaves, **characterized by** that it comprises in combination:
a block (A) mounted onto wheels capable of moving in selected locations in the proximity of an olive tree;
a telescopic rod (A.a.1) pivotally mounted onto said block and expandable at a height suitable for reaching any desired location of any olive tree whatsoever;
striker means comprising a rod (A.a.2) pivotally mounted at the outermost end of said telescopic rod (A.a.1), a plurality of evenly spaced rods (A.a.3) rotatably mounted perpendicularly along and on either side of said rod (A.a.2), an arrangement of plastic strikers (A.a.4) being disposed in a crosslike pattern perimetrically around each one of said plurality of evenly spaced rods (A.a.3);
means for the supply of power for driving movable items and especially for moving said plurality of evenly spaced rods (A.a.3) via a central motion transmission means activating a simultaneous rotation of all rods in said plurality of evenly spaced rods (A.a.3);
means for the collection of olives falling from the olive tree through striking action of said plastic strikers (A.a.4), said means for the collection of olives being deployed at a selected location underneath said olive tree and comprising an assembly of a plurality of olive collection foil portions (A.b.1) of parallelogram configuration, a telescopically extendable rod passing centrally through said plurality of olive collection foil portions and supporting the same, said telescopically extendable rod being pivotally mounted at a rear side of said block (A) capable of turning at an arc of 90° rightwards or 90° leftwards and of longitudinally extending to reach the desired position underneath the olive tree where olives are expected to fall through striking action of said plastic strikers (A.a.4), an aperture being provided at a discharge end of said assembly of a plurality of foil portions (A.b.1), each foil portion of said assembly of a plurality of olive collection foil portions (A.b.1) comprising inclined side walls so as to obtain an inclined orientation of the overall assembly to lead collected olives to pass through said aperture, a rotating belt (A.c) being adapted to receive the olives being discharged through said aperture, an absorber (A.d) being provided at a certain point along said rotating belt (A.c) for separating olives from leaves, whereby olives deprived from leaves are alternatively led into packaging sack (a.1) or packaging sack (b1), said packaging sacks (a1, b1) being mounted onto said block (A).

2. Olive harvesting machine as claimed in above claim 1, **characterized by** said rod (A.a.2) pivotally mounted at the outermost end of said telescopic rod (A.a.1) being capable of selectively moving in any orientation up-down, right-left with respect to said telescopic rod (A.a.1) thereby achieving a motion in simulation of the human hand.

3. Olive harvesting machine as claimed in above Claim 1, **characterized by** that an innermost foil portion of said assembly of a plurality of olive collection foil portions (A.b.1) is fixedly mounted onto said telescopically extendable rod passing centrally therethrough, whilst the other foils of said plurality of foil portions being selectively foldable within said innermost fixedly mounted foil portion as said telescopically extendable rod contracts whilst said means for the collection of olives is not in use and being desirably deployed as said telescopically extendable rod expands to bring said means for the collection of olives at a selected location underneath said olive tree.

4. Olive harvesting machine as claimed in above Claim 1, wherein the means for the supply of power for driving movable items and specifically for moving said plurality of evenly spaced simultaneously rotatable rods (A.a.3) of said striker means, said rotating belt (A.c), said telescopic rod (A.a.1) bearing the striker means and said telescopically extendable rod supporting said assembly of olive collection foil portions (A.b.1) is a hydraulic circuitry comprising an oil pump mounted onto said block (A) connected through oil circulation piping to said movable items of said olive harvesting machine.

5. Olive harvesting machine as claimed in above Claim 4, wherein the machine is attached to and pulled by a tractor or related vehicle and the power supply necessary for operating said hydraulic circuitry is received from said tractor or related vehicle.

6. Olive harvesting machine as claimed in above Claim 4, wherein the machine is an automotive machinery equipped with a driving seat and being provided with an autonomous power supply necessary for operating said hydraulic circuitry and for driving.

7. Method for the collection of olives employing an olive harvesting machine as claimed in above claims 1-6 and being **characterized by** that following bringing said olive harvesting machine in the proximity of an olive tree, it comprises the following steps being implemented by the operator through operations carried out through a console:
appropriately turning and deploying said telescopic rod (A.a.1) to bring said striker means comprising said rod (A.a.2) pivotally mounted at the outermost end thereof at a selected location of the olive tree;
appropriately turning and deploying a telescopically extendable rod supporting an assembly of olive collection foil portions (A.b.1) to bring said olive collection foil portions at the desired position underneath the olive tree wherein olives are expected to fall through striking action of said striker means;
performing a selective continuous human hand simulating movement of said rod (A.a.2) pivotally mounted at the outermost end of said telescopic rod (A.a.1) thereby effecting an efficient striking action in the olive collection process as said rod (A.a.2) selectively continuously moves in any orientation, up-down, right-left with respect to said telescopic rod (A.a.1), wherein olives and leaves being separated from the olive tree through said striking action fall downwards into said assembly of olive collection foil portions (A.b.1);
operating an absorber means (A.d) to effect separation of olives from leaves along a rotating belt (A.c.) wherein olives are discharged from said assembly of olive collection foils (A.b.1);
alternatively guiding discharge of olives from said rotating belt (A.c) into packaging sack (a1) or packaging sack (b1) to attain a continuous operation of the olive harvesting machine as discharge is being shifted from one packaging sack after filling thereof to the other;
repeating the above sequential steps with sequential movement of the olive harvesting machine at adjacent locations of the same or of an adjacent olive tree.

## Patentansprüche

1. Maschine für das Olivensammeln durch den Schlag des Olivenbäumes in ausgewählten Stellen für das Fallen der Oliven und danach deren Trennung von den Blättern, **dadurch gekennzeichnet dass** es aus den folgenden besteht:
einen Block (A), der sich auf Rändern beruht, der fähig ist an ausgewählten Stellen in der Nähe eines Olivenbäumes zu bewegen,
einen teleskopischen Stab (A.a.1), der Drehungsmöglichkeit hat und ist auf den besagten Block angestellt und in einer geeignete Höhe ausdehnbar, um jede gewünschte Stelle von jedem Olivenbaum erreichen zu können,
ein Schlagmittel des Olivenbäumes, das aus einem Stab (A.a.2) besteht, der drehbar am Ende des teleskopischen Stabes (A.a.1) eingesetzt ist, mit einem Vielfachen und in gleichem Abstand der gleichartig verteilten Staben (A.a.3), die drehbar, vertikal der Länge nach und von jede Seite des besagten Stabes (A.a.2) angestellt sind, wobei eine kreuzförmige Anordnung von plastischen Schlägern (A.a.4) ringsherum umfängt jede von den besagten in gleichem Abstand befindenen Staben (A.a.3),
ein kraftversorgungsmittel für die Bewegung der Mobilteilen und besonders für die Bewegung des besagten Vielfaches der gleichartig verteilten in gleichem Abstand Staben (A.a.3) durch einen zentralen Antrieb, der die gleichzeitige Drehung allen Staben des besagten Vielfaches gleichartig verteilten Staben (A.a.3) aktiviert,
mittel für das Sammeln der vom Olivenbaum fallenden Oliven durch den Schlag der besagten plastischen Schlägern (A.a.4), wobei dieses Mittel für das Olivensammeln sich in ausgewählten Stellen unter den betreffenden Olivenbaum entwickelt und beträgt eine Anordnung des Vielfaches der Blättern für das Olivensammeln (A.b.1) Parallelogrammförmig, einen teleskopisch ausgedehnten Stab, der zentral durch den besagten Vielfachen der Blättern für Olivensammeln (A.b.1) durchgeht und stützt diese Blätter (für Olivensammeln), wobei dieser teleskopisch ausgedehnter Stab sich drehbar in der hinteren Seite des Blocks (A) beruht und ist fähig zu einem Bogen von 90o grad, rechts oder links der Länge nach sich auszudehnen, damit die gewünschte Stelle des Mittels für Sammeln unter den Olivenbaum, wo auch das Fallen der Oliven durch den Schlag der plastischen Schlägern erwartet wird, erreicht werden kann, wodurch eine Öffnung an der Entlastungsendseite dieser Anordnung des Vielfaches der Blättern für Olivensammeln (A.b.1) vorgesehen wird, wo bei dieser Anordnung des Vielfaches der Blättern (A.b.1) jedes Blatt für das Olivensammeln geneigte Seitenwände enthält, so dass die Anordnung des Vielfaches der Blättern (A.b.1) für Olivensammeln sich in solcher Neigung orientiert, so dass die gesammelten Oliven durch der besagten Öffnung geführt werden, wo ein drehbarer Riemen (A.c) angepasst ist, dass er den entlasteten durch diese Öffnung Oliven entgegennimmt, wo ein Aufsauger (A.d) an eine bestimmte Stelle der Länge nach des drehbaren Riemes vorgesehen ist, der für die Trennung der Oliven von deren Blättern, bestimmt ist so dass die sortierte von den Blättern Oliven wechselweise entweder zum verpackenden Sack (a.1) oder zum verpackenden Sack (b.1) geführt werden, wo beide Säcke (a.1, b.1) auf den besagten Block angestellt sind.

2. Maschine für das Olivensammeln nach dem oberen Anspruch 1, **dadurch gekennzeichnet dass** der besagte Stab (A.a.2) sich drehbar auf der Endseite des besagten teleskopischen Stabes (A.a.1) beruht, in solcher Stelle wo er in irgenwelcher Orientierung, oben-unten, links-rechts sich ausgewählt bewegen kann in Bezug auf den besagten teleskopischen Stab (A.a.1), und auf diese Weise wird eine Bewegung erreicht, die ähnlich einer menschlichen Handbewegung ist.

3. Maschine für das Olivensammeln nach dem oberen Anspruch 1, **dadurch gekennzeichnet, dass** das Innerste Blatt dieser Anordnung des Vielfaches der Blättern für Olivensammeln (A.b.1) stabil auf die obere Seite des teleskopisch ausgedehnten Stabes angestellt ist, der zentral durch die Anordnung der Blättern durchgeht, während die übrigen Blätter der besagten Anordnung des Vielfaches der Blättern für Olivensammeln ausgewählt, sich unter den besagten innersten stabil angestellten Blatt für Olivensammeln eindringend zusammenfalten, wenn der besagte teleskopisch ausgedehnter Stab sich zusammenzieht im Falle wo es das besagte Mittel für Olivensammeln nicht benutzt wird und entwickeln sich die Blätter nach Willem wenn der besagte teleskopisch ausgedehnter Stab sich ausdehnt, um das besagte Mittel für Olivensammeln auf eine ausgewählte Stelle unter den Olivenbaum zu bringen.

4. Maschine für das Olivensammeln nach dem oberen Anspruch 1, wobei, das Kraftversorgungsmittel für die Bewegung des besagten Vielfaches gleichartig verteilten und gleichzeitig drehbaren Staben (A.a.3) des besagten Schlagmittels des Olivenbäumes, des besagten drehbaren Riemens, des besagten teleskopischen Stabes (A.a.1), der das Schlagmittel und den besagten teleskopisch ausgedehnten Stab trägt, der die besagte Anordnung der Blättern für Olivensammeln (A.b.1) stützt, ist eine hydraulische Umkreisung, die eine Ölpumpe beträgt, die auf den besagten Block (A) angestellt ist und verbindet sich durch Ölrohren mit den vorgenannten Mobilteilen der besagten Maschine für Olivensammeln.

5. Maschine für das Olivensammeln nach dem oberen Anspruch 4, wobei, die Maschine von einem Traktor verbunden ist und wird von dem angezogen, oder mit einem ähnlichen Wagen, wobei die notwendige Kraftversorgung wird für die Funktion der besagten hydraulischen Umkreisung von dem besagten Traktor oder eines ähnlichen Wagens gewährt.

6. Maschine für das Olivensammeln nach dem oberen Anspruch 4, wobei, die Maschine selbstbeweglich ist, ausgerüstet mit einem Fahrsitz und versorgt mit einer notwendigen autonomische Kraftversorgung für die Funktion der besagten hydraulischen Umkreisung und des Fahrens.

7. Methode für das Olivensammeln wodurch die beanspruchte nach den Ansprüchen 1-6 Maschine für Olivensammeln benutzt wird, **dadurch gekennzeichnet, dass** in einer Folge der Annäherung des ausgewählten Olivenbäumes von der Maschine für Olivensammeln werden von dem Betätiger durch eine Konsole, die am Block eingesetzt ist, die folgenden Schritte vorgenommen:
Umdrehung in der geeigneten Stelle und Entwicklung des teleskopischen Stabes (A.a.1), damit das drehbar am Ende des Stabes verbundenes Schlagmittel (A.a.2) ausgewählte Stelle des Olivenbäumes annähern kann,
Umdrehung in der geeigneten Stelle und Entwicklung des teleskopisch ausgedehnten Stabes, der die Anordnung der Blättern für Olivensammeln (A.b.1) stützt, damit die besagte Anordnung der Blättern für Olivensammeln die gewünschte Stelle des Olivenbäumes soviel annähern kann, dass von dieser Stelle das Fallen der Oliven durch den Schlag des Schlagmittels zu erwarten ist,
Durchführung der ausgewählten dauerhaften Bewegung ähnlich der menchlichen Handbewegung des besagten Stabes (A.a.2), der drehbar am Ende des teleskopischen Stabes (A.a.1) verbunden ist, durch den der Schlag während des Verfahrens für Olivensammeln erfolgreich statt findet, soweit der besagte Stab (A.a.2) dauerhaft in verschiedener Richtung oben-unten, links-rechts sich auswählend bewegt in Bezug auf den besagten teleskopischen Stab (A.a.1), so dass Oliven und Blätter getrennt vom Olivenbaum durch den besagten Schlag auf den unter den Baum befindene Anordnung der Blättern für Olivensammeln (A.b.1) fallen,
Funktion eines Aufsaugers (A.d) für die Trennung der Oliven von den Blättern der Länge nach eines drehbaren Riemes (A.c), woran die Blätter nach ihrer Entlastung von dem Mittel für Olivensammeln lagern,
Das wechselweise Fahren der entlasteten Oliven von dem besagten drehbaren Riemen (A.c) entweder im Verpackungssack (a.1) oder Verpackungssack (a.2), damit die Funktion der Maschine für Olivensammeln ununterbrochen statt findet, indem die von dem Riemen Herausnahme sich von einem Sack, nachdem er mit Oliven gefüllt ist, zu dem zweiten Sack umstellt,
Wiederholung der obengennanten hintereinander Schritten mit einer hintereinander Umstellung der Maschine in der geeigneten Stellen des Bäumes oder demnächsten Bäumes.

## Revendications

1. Machine pour la collecte des olives au moyen de secouement de l'olivier à des endroits choisis pour effectuer la chute des olives et par la suite leur séparation des feuilles, **caractérisée en ce qu'**elle comporte en association:
un bloc (A) monté sur des roues capable de se déplacer à des endroits choisis à proximité d'un olivier;
une tige télescopique (A.a.1) rotativement montée sur ledit bloc et extensible jusqu'à une hauteur appropriée afin d'atteindre n'importe quel endroit choisi de n'importe quel olivier;
moyen de secouement de l'olivier qui comporte une tige (A.a.2) rotativement montée au bout de ladite tige télescopique (A.a.1), avec une multitude de tiges (A.a.3) uniformément dissociées et rotativement montées d'une manière perpendiculaire le long également de chaque côté de ladite tige (A.a.2), un dispositif de fibres en plastique (A.a.4) étant disposé en forme de croix autour de chacune de ladite multitude des tiges également dissociées (A.a.3) ;
moyens d'approvisionnement en énergie pour le déplacement des moyens mobiles et particulièrement le déplacement de ladite multitude de tiges uniformément dissociées (A.a.3) à travers une transmission centrale de mouvement qui active une rotation simultanée de toutes les tiges de ladite multitude des tiges uniformément dissociées (A.a.3),
moyen pour la collecte des olives tombées de l'olivier au moyen de l'action de secouement desdites fibres en plastique (A.a.4), où ledit moyen pour la collecte d'olives est déployé à un endroit choisi sous ledit olivier et comporte un dispositif d'une multitude de plaques métalliques pour la collecte des olives (A.b.1) étant en forme de parallélogramme, une tige téléscopiquement extensible qui traverse au milieu de ladite multitude de plaques métalliques et soutient les plaques métalliques; où ladite tige téléscopiquement extensible est rotativement montée sur le côté postérieure dudit bloc (A) et qui est capable d'effectuer une rotation de 90 degrés à droite ou à gauche et qui est capable de se s'étendre longitudinalement afin d'obtenir une position désirée dudit moyen de collecte sous l'olivier où s'effectue la chute des olives par l'action de secouement desdites fibres en plastique (A.a.4), où une ouverture de déchargement est fournie à une extrémité dudit dispositif de la multitude des plaques métalliques pour la collecte des olives (A.b.1), où dans ledit dispositif de la multitude de plaques métalliques pour la collecte des olives (A.b.1) chaque plaque métallique comporte des parois latérales inclinées afin que le dispositif de la multitude de plaques métalliques pour la collecte des olives (A.b.1) soit orienté dans une telle inclinaison afin que les olives collectées soient dirigées à travers ladite ouverture, où une courroie rotative (A.c) est adaptée afin de recevoir les olives déchargées à travers ladite ouverture, où un dispositif d'absorption (A.d) est fourni à un certain endroit de ladite courroie rotative (A.c) pour la séparation des olives des feuilles, ainsi les olives séparées des feuilles sont alternativement dirigées soit vers le sac d'emballage (a.1) ou le sac d'emballage (bl), où lesdits sacs d'emballage (a1, b1) sont montés sur ledit bloc (A).

2. Machine pour la collecte des olives selon la revendication 1 ci-dessus, **caractérisée en ce que** ladite tige (A.a.2) est rotativement montée au bout de ladite tige télescopique (A.a.1) étant capable de se déplacer sélectivement dans n'importe quelle direction vers le haut ou vers le bas, vers la gauche ou vers la droite relativement à ladite tige télescopique (A.a.1), effectuant de ce fait un mouvement de simulation identique à celle de la main humaine.

3. Machine pour la collecte des olives selon la revendication 1 ci-dessus, **caractérisée en ce que** la plaque métallique la plus interne dudit dispositif de la multitude des plaques métalliques pour la collecte d'olives (A.b.1) est fixement montée au-dessus de ladite tige téléscopiquement extensible qui traverse au milieu du dispositif des plaques métalliques, tandis que les autres plaques métalliques dudit dispositif de la multitude pour la collecte des olives se plient sélectivement en s'introduisant sous ladite plaque métallique la plus interne montée fixement pour la collecte des olives lorsque la tige téléscopiquement extensible se plie au cas où il n'y aucun usage dudit moyen de collecte des olives et de préférence déployé tandis que la tige téléscopiquement extensible s'étend afin de diriger ledit moyen de collecte d'olives à un endroit choisi sous ledit olivier.

4. Machine pour la collecte des olives selon la revendication 1 ci-dessus, où l'approvisionnement en énergie pour le déplacement spécifiquement de ladite multitude des tiges uniformément dissociées (A.a.3) dudit moyen de secouement de l'olivier, de ladite courroie rotative (A.c), de ladite tige télescopique (A.a.1) qui porte le moyen de secouement et de ladite tige téléscopiquement extensible qui soutient ledit dispositif des plaques métalliques pour la collecte des olives (A.b.1), où ce moyen d'approvisionnement en énergie est un circuit hydraulique comportant une pompe d'huile montée sur ledit bloc (A) et qui est reliée au moyen de tuyaux de circulation d'huile pour le déplacement desdits éléments mobiles de ladite machine de collecte des olives.

5. Machine pour la collecte des olives selon la revendication 4 ci-dessus, où la machine est attachée et tirée par un tracteur ou un véhicule similaire et où l'approvisionnement en énergie nécessaire pour le fonctionnement dudit circuit hydraulique est octroyée par ledit tracteur ou le véhicule similaire.

6. Machine pour la collecte des olives selon la revendication 4 ci-dessus, où la machine est une automobile équipé d'un siège de conduite et équipé d'un approvisionnement en énergie autonome nécessaire pour le fonctionnement dudit circuit hydraulique et indispensable pour la conduite du véhicule.

7. Méthode pour la collecte des olives, où est utilisée la machine pour la collecte des olives selon les revendications 1-6 ci-dessus et **caractérisée en ce qu'**en après l'approche de l'olivier choisi par ladite machine pour la collecte des olives, sont effectuées, par le conducteur au moyen d'une console installée sur la machine, les étapes consécutives suivantes:
la rotation appropriée et le déploiement de ladite tige télescopique (A.a.1) afin d'apporter ledit moyen de secouement qui comprend ladite tige (A.a.2) rotativement montée au bout le plus externe de celle-ci dans un endroit choisi de l'olivier;
la rotation appropriée et le déploiement de la tige téléscopiquement extensible soutenant le dispositif des plaques métalliques pour la collecte d'olives (A.b.1) afin d'apporter lesdites plaques métalliques dans une position désirée sous l'olivier à ce que les olives puissent tomber au moyen de l'action de secouement dudit moyen de secouement;
l'exécution d'un mouvement sélective continue de ladite tige (A.a.2) qui est liée rotativement montée au bout de ladite tige télescopique (A.a.1) équivalente à celui de la main humaine par laquelle s'effectue l'action de secouement efficace pendant le processus de la collecte des olives tandis que ladite tige (A.a.2) se déplace continuellement d'une façon sélective sur n'importe quelle direction, vers le haut ou vers le bas, vers la gauche ou vers la droite relativement à ladite tige télescopique (A.a.1), où les olives et les feuilles qui sont séparées de l'olivier au moyen de ladite action de secouement tombent à l'intérieur dudit dispositif des plaques métalliques pour la collecte des olives (A.b.1);
le fonctionnement d'un dispositif d'absorption (A.d) pour effectuer la séparation les olives des feuilles le long d'une courroie rotative (A.c.) vers laquelle les feuilles sont dirigées après leur déchargement par le moyen dudit dispositif de collecte des olives (A.b.1),
la conduite alternative des olives déchargées par ladite courroie rotative (A.c) vers le sac d'emballage (a1) ou le sac d'emballage (bl) afin d'obtenir un fonctionnement continu de la machine pour la collecte des olives ainsi que la décharge par la courroie se déplace d'un sac d'emballage ayant été rempli vers l'autre sac d'emballage;
la répétition des étapes consécutives ci-dessus avec le déplacement consécutif de la machine dans des positions adjacentes du même ou de l'olivier adjacent.
